# EUROPEAN PATENT APPLICATION

(11) **EP 1 876 725 A2**
(43) Date of publication of application: **09.01.2008**
(21) Application number: 07012737.8
(22) Date of filing: 28.06.2007
(51) Int. Cl.: H04B 7/005

(54) **Transmit power control**

(30) Priority: 04.07.2006 JP 2006184367
(71) Applicant: NEC Corporation, Minato-ku Tokyo (JP)
(72) Inventor: Azuma, Tomohiro, Minato-ku, Tokyo 108-8001 (JP)
(74) Representative: Glawe, Delfs, Moll

(57) **Abstract**

The invention discloses transmit power control that easily controls transmit power for transmitting a signal to a mobile terminal so that the transmit power has an optimal value. When there is a succession of transmit power control information transmitted from a mobile terminal to the radio base station, that includes an instruction to raise transmit power, during a period from when a calculated total transmit power, based on power information of a multiple signal that is obtained by multiplexing signals transmitted by each mobile terminal, exceeds a preliminarily set power threshold to when the total transmit power falls below the preliminarily set power threshold, the transmit power control information is converted to transmit power control information that includes an instruction to maintain transmit power at a constant level. The transmit power is controlled based on the converted transmit power control information. The signal is transmitted to the mobile terminal by use of the controlled transmit power.

## Description

### BACKGROUND OF THE INVENTION

### 1. Field of the Invention

The present invention relates to a radio base station that transmits a signal to a mobile terminal in a radio communications system, and to a transmit power control method using the same.

### 2. Description of the Related Art

In conventional radio communications systems, the transmit power for transmitting a downlink signal from a radio base station to a mobile terminal is controlled. As the control method thereof, there has been used a method which measures the reception level of a downlink signal in a mobile terminal that is the receiving side and based on the measured reception level, instructs a radio base station that is the transmitting side to control transmit power.

As a method of measuring this reception level, JP-1993-244056A has disclosed a method which measures a bit error rate of a received signal in the receiving side and controls transmit power based on the measured bit error rate. According to this method, when the measured bit error rate is larger than a preliminarily set threshold, a request to raise transmit power is made to the transmitting side.

Also, to request the transmitting side to control transmit power, a TPC command is used. This TPC command is a command by which a mobile terminal instructs a radio base station that is the transmitting side to raise or lower the transmit power for transmitting a downlink signal from the radio base station to the mobile terminal. The TPC command generated by the mobile terminal is transmitted to the radio base station, and transmit power is controlled based on the TPC command received by the radio base station. The transmitted TPC command has a format in which several bits are inserted as a TPC bit in the signal transmitted from the radio base station to the mobile terminal.

For example, in a radio base station of a mobile communications radio network which inserts the above TPC bit in a radio line having a plurality of mobile terminals connected thereto by a multiple access scheme and thereby controls transmit power, the total transmit power of combined downlink signals is measured. When the measured total transmit power exceeds a specified maximum transmit power, radio communication is performed between the plurality of mobile terminals and the radio base station while control is performed so that the total transmit power of downlink signals agrees with the specified maximum transmit power.

Also, in the above conjunction, JP-2004-328689A has disclosed a method which presets the number of protection stages on whether or not the above described threshold or maximum transmit power to be compared is exceeded, and when the number of protection stages is exceeded, a request to control transmit power is made to the transmitting side.

Also, instead of control by the method of transmit power control, WO01-039540 has disclosed a method by which, when the number of continuous receptions of signals transmitted from the transmitting side exceeds a preliminarily set threshold indicating a congestion state, the receiving side performs control to solve the congestion.

However, the above described conventional transmit power control methods have the following problems.

That is, after a total transmit power value is calculated before power suppression is measured, power suppression control is performed, resulting in a problem that there occurs a difference between the calculated total transmit power value (to be reported to the upper apparatus connected to the apparatus) and the actual transmit power. Further, even if the mobile terminal continuously makes a request to raise transmit power, the power (after suppression) actually transmitted to the mobile terminal remains smaller than the expected value, resulting in a problem in which the control performed by the upper apparatus to prevent congestion from occurring cannot be easily cancelled.

Also, uniform power suppression control is performed for communication signals (individual channels) with all the users who don't bypass power suppression, resulting in a problem in which communication quality degradation between the radio base station and mobile terminals currently performing communication occurs equally to all the users.

Also, power suppression control is not performed until the maximum transmit power is exceeded, resulting in a problem in which an excessive transmit power is set.

Also, irrespective of the amplitude of total transmit power and the amplitude of set power in communication signals sent to each mobile terminal, the control quantity of transmit power remains constant until the maximum transmit power is exceeded, resulting in a problem in which a total transmit power that significantly exceeds the allowable maximum transmit power of the apparatus may be set and thus the breakdown of transmitting system devices or a system shutdown may occur due to excessive input.

Also, when the total transmit power exceeds the allowable maximum transmit power of the apparatus, power suppression control is also applied to a power suppression bypassing channel, resulting in a problem in which area reduction (suppression of shared channel) occurs in the service area of the radio base station apparatus and also, the problem that when a mobile terminal performs communication, communication may be cut off.

Also, there is used a configuration which performs classification into channels that perform power control and channels that bypass power control, and which performs different power control for each classified channel, and which performs multiplexing and combining of channels again, resulting in the problem that signal processing becomes significantly complex.

### SUMMARY OF THE INVENTION

An object of the present invention is to provide a radio base station capable of easily controlling transmit power so that the transmit power has an optimal value, and a transmit power control method using the same.

According to the present invention, of transmit power control information transmitted from a mobile terminal, when there is a succession of transmit power control information indicating an instruction to raise transmit power, during a period from when total transmit power is calculated, based on power information from multiple signals obtained by multiplexing signals transmitted by each mobile terminal, exceeds a preliminarily set power threshold to when the total transmit power falls below the preliminarily set power threshold, the transmit power control information is converted to transmit power control information indicating an instruction to maintain transmit power at a constant value. The transmit power is controlled based on the converted transmit power control information, and the signal is transmitted to the mobile terminal by use of the controlled transmit power.

Accordingly, during a period from when the total transmit power value exceeds the power threshold to when the total transmit power value falls below the power threshold, transmit power can be prevented from continuously increasing, i.e., can be maintained at a constant value by converting the corresponding transmit power control information.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a view illustrating a first embodiment of a radio base station according to the present invention;
Fig. 2 is a flowchart for explaining a transmit power control method in the radio base station having the configuration illustrated in Fig. 1;
Fig. 3 is a view illustrating a process of processing performed in a TPC bit determination unit illustrated in Fig. 1, and a transmit power value based on the result thereof;
Fig. 4 is a view illustrating a second embodiment of a radio base station according to the present invention;
Fig. 5 is a flowchart for explaining a transmit power control method in the radio base station having the configuration illustrated in Fig. 4;
Fig. 6 is a view for explaining a transmit power control method in which there is separately provided a threshold for increasing the control quantity as the total transmit power value decreases; and
Fig. 7 is a view illustrating a third embodiment of a radio base station according to the present invention.

### DETAILED DESCRIPTION OF THE PREFERRED EMBODIMENTS

### (First Embodiment)

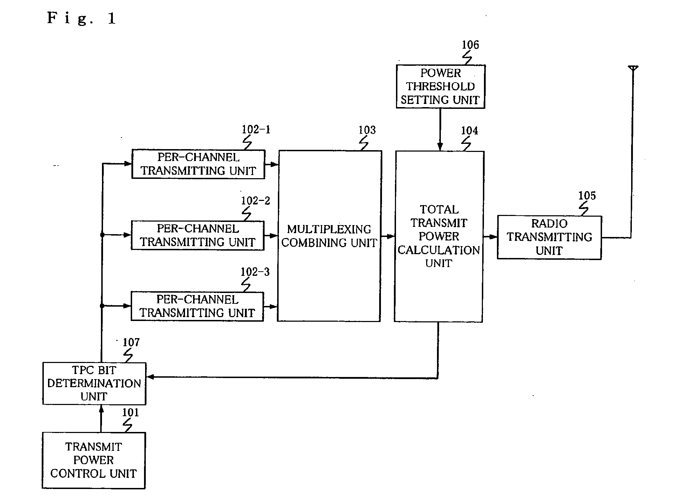

Referring to Fig. 1, there is illustrated a first embodiment of a radio base station including transmit power control unit 101, per-channel transmitting units 102-1 to 102-3, multiplexing combining unit 103, total transmit power calculation unit 104, radio transmitting unit 105, power threshold setting unit 106 and TPC bit determination unit 107. Transmit power control unit 101 performs demodulation to obtain a TPC bit that is transmit power control information assigned in uplink signals transmitted from each mobile terminal, and outputs the TPC bit that corresponds to each channel (downlink signals transmitted to each mobile terminal) to TPC bit determination unit 107. Per-channel transmitting units 102-1 to 102-3 generate transmit data of a shared channel and individual channels. Also, per-channel transmitting units 102-1 to 102-3 apply power (amplitude) control and spreading modulation to the generated transmit data based on the TPC bit outputted from TPC bit determination unit 107. Also, after power (amplitude) control and spreading modulation, the spread data of each channel are outputted to multiplexing combining unit 103. Multiplexing combining unit 103 multiplexes the spread data of each channel outputted from per-channel transmitting units 102-1 to 102-3, and also outputs a multiple signal to total transmit power calculation unit 104. Power threshold setting unit 106 arbitrarily sets suppression start and cancels power thresholds for suppressing transmit power, and also outputs the set power threshold to total transmit power calculation unit 104. Total transmit power calculation unit 104 transmits to radio transmitting unit 105 multiple signals of channels outputted from multiplexing combining unit 103, and also calculates a total transmit power value based on multiple signal power (amplitude) information. Also, total transmit power calculation unit 104 outputs a transmit excess output signal to TPC bit determination unit 107 during a period from when the calculated total transmit power value exceeds the suppression start power threshold outputted from power threshold setting unit 106 to when the calculated total transmit power value falls below the suppression cancel power threshold outputted from power threshold setting unit 106. Radio transmitting unit 105 performs D/A (digital-analog) conversion, band limiting, amplification and frequency conversion of the baseband multiple signal that is the multiple signal outputted from total transmit power calculation unit 104, and then outputs the RF signal to an antenna. When a transmit excess output signal is outputted from total transmit power calculation unit 104, if it is detected that the TPC bit outputted from transmit power control unit 101 is a TPC bit (for example, "11", "11") which causes transmit power to continuously increase, TPC bit determination unit 107 converts such TPC bit to an alternation ("11", "00"), and also outputs the converted TPC bit to per-channel transmitting units 102-1 to 102-3. In this case, per-channel transmitting units 102-1 to 102-3 correspond to channels #0 to #2, respectively. In the present embodiment, the number of channels is three, but that number is equal to the number of used channels and not limited to three.

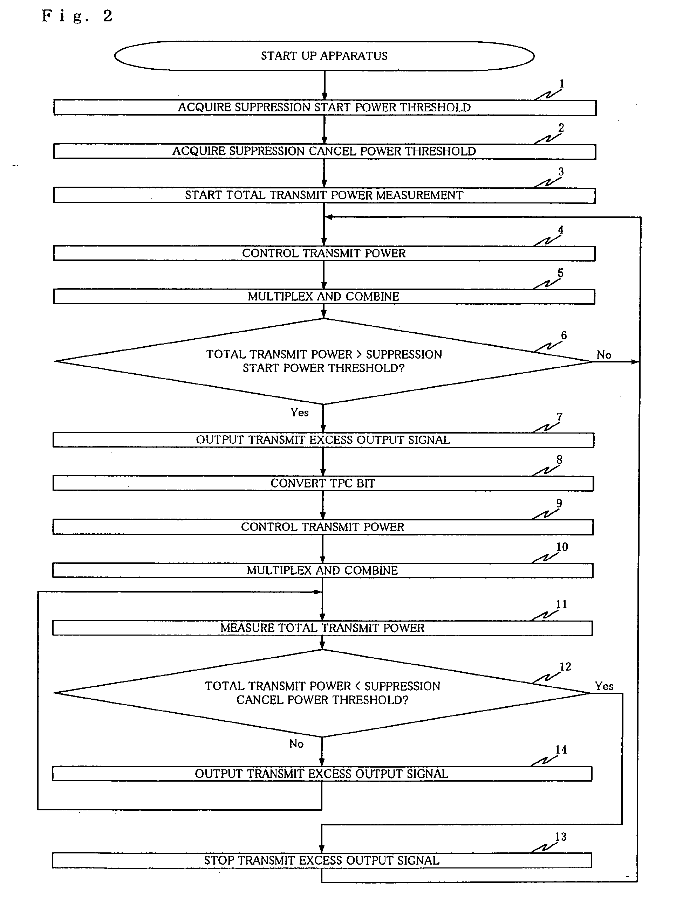

A transmit power control method in the radio base station having the configuration illustrated in Fig. 1 will be described below with reference to Fig. 2.

First, when the apparatus (that particular radio base station) is started up and a suppression start power threshold is set in power threshold setting unit 106, the suppression start power threshold that has been set is outputted from power threshold setting unit 106 to total transmit power calculation unit 104. Then, in step 1, total transmit power calculation unit 104 acquires the suppression start power threshold. Similarly, when a suppression cancel power threshold is set in power threshold setting unit 106, the set suppression cancel power threshold is outputted from the power threshold setting unit 106 to total transmit power calculation unit 104. Then, in step 2, total transmit power calculation unit 104 acquires the suppression cancel power threshold. As the suppression start power threshold is set at this time, there is arbitrarily set an allowable maximum transmit power value or a value smaller than that value. As the suppression cancel power threshold value, there is set a value equal to the suppression start power threshold or a value smaller than that value. Also, any of the processings of step 1 and step 2 may be performed first.

When total transmit power calculation unit 104 acquires the suppression start power threshold and the suppression cancel power threshold, in step 3, total transmit power calculation unit 104 initiates a calculation of total transmit power value based on power (amplitude) information outputted from multiplexing combining unit 103.

In step 4, the calculation of total transmit power value in total transmit power calculation unit 104 is controlled by per-channel transmitting units 102-1 to 102-3 based on the TPC bit outputted from TPC bit determination unit 107. Then, in step 5, signals to be transmitted using the controlled power are multiplexed by multiplexing combining unit 103, and the transmit power of the multiple signal is calculated. At this time, the calculated transmit power is reported to an upper apparatus(not illustrated) that is connected to the radio base station.

In step 6, the calculated total transmit power value and the suppression start power threshold outputted from power threshold setting unit 106 are compared by total transmit power calculation unit 104.

When it is determined that the calculated total transmit power value is larger than the suppression start power threshold outputted from power threshold setting unit 106, in step 7, a transmit excess output signal is outputted from total transmit power calculation unit 104 to TPC bit determination unit 107. The format of this transmit excess output signal is not particularly specified as long as it is a signal allowing determination of whether the signal is valid or invalid. For example, a signal of "0" or "1" may be used; "0" means "invalid" and "1" means "valid". In this case, in step 7, a transmit excess output signal of "1" is outputted from total transmit power calculation unit 104 to TPC bit determination unit 107.

Meanwhile, when it is determined in step 6 that the calculated total transmit power value is not larger than the suppression start power threshold outputted from power threshold setting unit 106, then processing of step 4 is performed again.

When the transmit excess output signal outputted from total transmit power calculation unit 104 in step 7 is "1", in step 8, the TPC bit is converted by TPC bit determination unit 107. More specifically, when the TPC bit outputted from transmit power control unit 101 to TPC bit determination unit 107 is a TPC bit (for example, "11", "11") that is an instruction to continuously increase transmit power, the TPC bit is converted to an alternative ("11", "00"). The TPC bit other than that is not converted. The TPC bit is outputted from TPC bit determination unit 107 to per-channel transmitting units 102-1 to 102-3.

Thereafter, in step 9, transmit power is controlled by per-channel transmitting units 102-1 to 102-3 based on the TPC bit outputted from TPC bit determination unit 107. Signals to be transmitted using controlled transmit power are multiplexed by multiplexing combining unit 103 in step 10.

When the multiple signal obtained by the multiplexing performed by multiplexing combining unit 103 is outputted from multiplexing combining unit 103 to total transmit power calculation unit 104, a total transmit power for transmitting this multiple signal is calculated again in step 11.

Then, in step 12, the calculated total transmit power value and the suppression cancel power threshold outputted from power threshold setting unit 106 are compared by total transmit power calculation unit 104.

When it is determined that the calculated total transmit power value is smaller than the suppression cancel power threshold outputted from power threshold setting unit 106, in step 13, the output of transmit excess output signal is stopped. For example, instead of "1" which has been outputted until now as the transmit excess output signal, "0" is outputted.

Meanwhile, when it is determined in step 12 that the calculated total transmit power value is not smaller than the suppression cancel power threshold outputted from power threshold setting unit 106, a transmit excess output signal continues to be outputted in step 14. For example, "1" continues to be outputted as the transmit excess output signal. That is, during a period from when the total transmit power value exceeds the suppression start power threshold to when the total transmit power value falls below the suppression cancel power threshold, a transmit excess output signal indicating "valid" is outputted to TPC bit determination unit 107. Accordingly, during a period from when the total transmit power value exceeds the suppression start power threshold to when the total transmit power value falls below the suppression cancel power threshold, transmit power is prevented from continuously increasing by converting the corresponding TPC bit, i.e., transmit power can be maintained at a constant value. Here, when the suppression cancel power threshold is set to a value smaller than the suppression start power threshold, it is possible to implement control having a hysteresis characteristic.

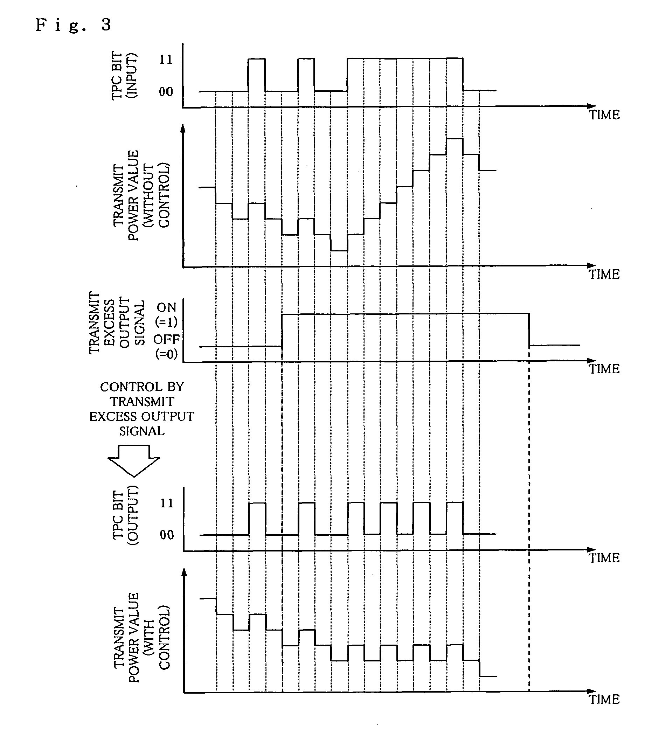

As illustrated in Fig. 3, when a TPC bit is not controlled (not converted), the inputted TPC bit is directly outputted, so signal transmission is performed using a transmit power value based on the inputted TPC bit.

Meanwhile, when TPC bit is controlled (converted) based on the transmit excess output signal, i.e., when the transmit excess output signal is ON ("1") and thus the inputted TPC bit ("11", "11") is converted to an alternative ("11", "00"), then the transmit power value can be prevented from continuously increasing.

Also, when there are a plurality of mobile terminals currently subjected to power suppression at the time when the total transmit power value falls below the suppression cancel power threshold, at the time when the suppression control of transmit power is cancelled, the transmit power to each mobile terminal may sharply rise and the total transmit power may also become large. In this case, the sharp increase of total transmit power can be prevented by preliminarily setting an order of priority of mobile terminal for which suppression control is cancelled.

For example, in TPC bit determination unit 107, there are accumulated TPC bits of each mobile terminal obtained by demodulating uplink signals. Then, based on previous accumulation results (accumulated values for a given interval), the order of priority of the mobile terminal, for which transmit power control based on a TPC bit is restarted, may be determined, and transmit power control based on a TPC bit may be restarted according to the order of the mobile terminal that has the higher order of priority, immediately after the transmit excess output signal changes to OFF ("0") (i.e., immediately after the total transmit power value falls below the suppression cancel power threshold). For example, the order of priority of a mobile terminal having a larger accumulated value (the number of times of performing control to increase transmit power being large) may be set higher; the order of priority of a mobile terminal having a smaller accumulated value (the number of times of performing control to increase transmit power being small) may be set lower.

Also, in TPC bit determination unit 107, based on set power (a momentary value or an average for a given interval), the order of priority of a mobile terminal, for which transmit power control based on a TPC bit is restarted, may be determined, and transmit power control based on a TPC bit may be restarted according to the order of the mobile terminal that has a higher order of priority, immediately after the transmit excess output signal changes to OFF ("0") (i.e., immediately after the total transmit power value falls below the suppression cancel power threshold). For example, the order of priority of a mobile terminal having a larger set power may be set higher; the order of priority of mobile terminal having a smaller set power may be set lower.

Also, in TPC bit determination unit 107, based on uplink signals of each mobile terminal, SIR (Signal to Interference Ratio) is calculated which is the ratio of reception power to interference signal power. Then, the order of priority of the mobile terminal, for which transmit power control based on a TPC bit is restarted, may be determined according to the order of the mobile terminal that has a smaller reception SIR, and transmit power control based on a TPC bit may be restarted according to the order of the mobile terminal that has a higher order of priority, immediately after the transmit excess output signal changes to OFF ("0") (i.e., immediately after the total transmit power value falls below the suppression cancel power threshold).

In this manner, in a radio base station of a mobile communications network which inserts a TPC bit in a radio line having a plurality of mobile terminals connected thereto by a multiple access scheme and thereby controls transmit power, even when the total transmit power exceeds a set power threshold, transmit power suppression can not be performed for all the mobile terminals but only for a specified mobile terminal (an individual channel having downlink transmit power which continuously increases). At the same time, it is possible to provide a transmit power control method which performs transmit power suppression only for an individual channel and performs no transmit power suppression for a shared channel.

### (Second Embodiment)

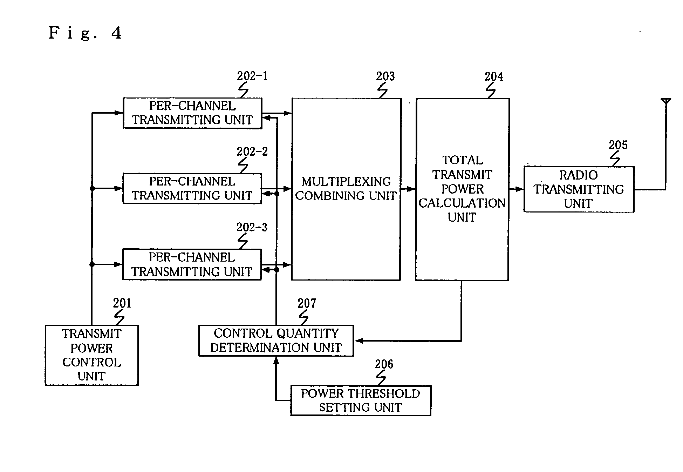

Referring to Fig. 4, there is illustrated a second embodiment of a radio base station including transmit power control unit 201, per-channel transmitting units 202-1 to 202-3, multiplexing combining unit 203, total transmit power calculation unit 204, radio transmitting unit 205, power threshold setting unit 206 and control quantity determination unit 207. Transmit power control unit 201 performs demodulation to obtain a TPC bit that is transmit power control information assigned in uplink signals transmitted from each mobile terminal, and also outputs a TPC bit corresponding to each channel (downlink signals transmitted to each mobile terminal) to per-channel transmitting units 202-1 to 202-3. Per-channel transmitting units 202-1 to 202-3 generate transmit data of a shared channel and of individual channels. Also, per-channel transmitting units 202-1 to 202-3 apply power (amplitude) control and spreading modulation to the generated transmit data based on the TPC bit outputted from transmit power control unit 201 and a control quantity outputted from control quantity determination unit 207. Also, after power (amplitude) control and spreading modulation, the spread data of each channel are outputted to multiplexing combining unit 203. Multiplexing combining unit 203 multiplexes the spread data of each channel outputted from per-channel transmitting units 202-1 to 202-3, and also outputs the multiple signal to total transmit power calculation unit 204. Power threshold setting unit 206 arbitrarily sets suppression start and cancel power thresholds for suppressing transmit power, and also outputs the set power threshold to total transmit power calculation unit 204. Total transmit power calculation unit 204 transmits to radio transmitting unit 205 the multiple signal of channels outputted from multiplexing combining unit 203, and also calculates a total transmit power value based on multiple signal power (amplitude) information. Also, total transmit power calculation unit 204 outputs the total transmit power information to control quantity determination unit 207 during the period from when the calculated total transmit power value exceeds the suppression start power threshold outputted from power threshold setting unit 206 to when the calculated total transmit power value falls below the suppression cancel power threshold outputted from power threshold setting unit 206. Radio transmitting unit 205 performs D/A (digital-analog) conversion, band limiting, amplification and frequency conversion of the baseband multiple signal which is the multiple signal outputted from total transmit power calculation unit 204, and then outputs the RF signal to an antenna. When the total transmit power information is outputted from total transmit power calculation unit 204, control quantity determination unit 207 determines a control quantity which is a gain or reduction of transmit power value dependent on total transmit power information, and also outputs the determined control quantity to per-channel transmitting units 202-1 to 202-3. Per-channel transmitting units 202-1 to 202-3 correspond to channels #0 to #2, respectively. In the present embodiment, the number of channels is three, but that number is equal to the number of used channels and not limited to three.

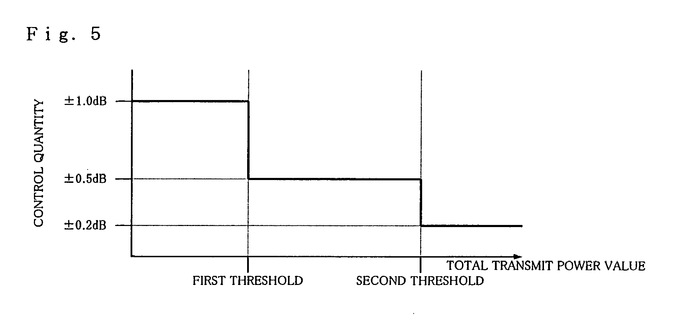

A transmit power control method for use in the radio base station having the configuration illustrated in Fig. 4 will be described below with reference to Fig. 5.

First, a power threshold acting as a trigger for varying a transmit power control quantity based on TPC bit is arbitrarily set in power threshold setting unit 206. Then, the set power threshold is outputted to control quantity determination unit 207. The power threshold for varying a control quantity can be arbitrarily set. For example, as a first trigger for varying a control quantity, a power value for starting Congestion Control which controls the transmit rate, may be set as a first control quantity varying threshold. Also, as a second trigger, a power value for starting Admission Control which controls reception of a new call, may be set as a second control quantity varying threshold. When these are acquired from an upper apparatus that is connected to the radio base station and set respectively as power thresholds, it is possible to implement an operation for adapting congestion control to the upper apparatus.

Also, in total transmit power calculation unit 204, there is calculated a total transmit power value which is the sum of multiplexing combining power (amplitude) information of each channel. The calculated total transmit power value is outputted from total transmit power calculation unit 204 to control quantity determination unit 207.

In control quantity determination unit 207, a transmit power control quantity is determined based on the total transmit power information outputted from total transmit power calculation unit 204 and the power threshold outputted from power threshold setting unit 206. Then, the determined control quantity is outputted to per-channel transmitting units 202-1 to 202-3. Here, a description will be given, assuming that the first control quantity varying threshold is 70% of the allowable maximum transmit power of the apparatus, and the second control quantity varying threshold is 90% of the allowable maximum transmit power of the apparatus, and the allowable maximum transmit power of the apparatus is +43 dBm (19952.6 mW), and the ordinary transmit power control quantity is ±1 dB.

Since the allowable maximum transmit power of the apparatus is +43 dBm (19952.6 mW), the first control quantity varying threshold which is 70% thereof is 41.4510 dBm (13966.8 mW). As illustrated in Fig. 5, when the total transmit power value exceeds the first control quantity varying threshold, the control quantity is varied from +1.0 dB to +0.5 dB in the direction of increasing transmit power in control quantity determination unit 207; and the control quantity is varied from -1.0 dB to -0.5 dB in the direction of reducing transmit power. The varied control quantity is outputted to per-channel transmitting units 202-1 to 202-3. Thereafter, as illustrated in Fig. 5, when the total transmit power value exceeds 90% of the allowable maximum transmit power, i.e., exceeds the second control quantity varying threshold which is 42.5424 dBm (17957.4 mW), then the control quantity is varied from +0.5 dB to +0.2 dB in the direction of increasing transmit power in control quantity determination unit 207; and the control quantity is varied from -0.5 dB to -0.2 dB in the direction of reducing transmit power. The varied control quantity is outputted to per-channel transmitting units 202-1 to 202-3.

Also, thereafter, when the total transmit power value falls below the second control quantity varying threshold, the control quantity is varied from +0.2 dB to +0.5 dB in the direction of increasing transmit power in control quantity determination unit 207; and the control quantity is varied from -0.2 dB to -0.5 dB in the direction of reducing transmit power. The varied control quantity is outputted to per-channel transmitting units 202-1 to 202-3. Further, thereafter, when the total transmit power value falls below the first control quantity varying threshold, the control quantity is varied from +0.5 dB to +1.0 dB in the direction of increasing transmit power in control quantity determination unit 207; and the control quantity is varied from -0.5 dB to -1.0 dB in the direction of reducing transmit power. The varied control quantity is outputted to per-channel transmitting units 202-1 to 202-3.

Here, there may be provided another threshold for increasing the control quantity as the total transmit power value decreases.

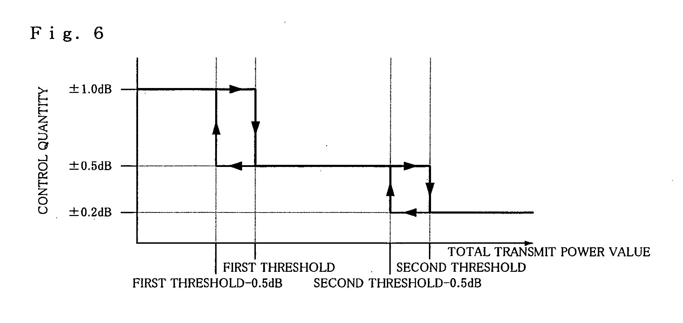

Referring to Fig. 6, as a threshold for increasing the control quantity as the total transmit power value decreases, there are provided values that are different from the above described first control quantity varying threshold and second control quantity varying threshold. For example, the second control quantity varying threshold -0.5 dB may be set as the threshold for varying the control quantity from ±0.2 dB to ±0.5 dB; and the first control quantity varying threshold -0.5 dB may be set as the threshold for varying the control quantity from ±0.5 dB to ±1.0 dB. As a result, a hysteresis characteristic can be implemented.

Also, the above described absolute value of the control quantity is identical between the direction of increasing transmit power and the direction of reducing transmit power, but the control quantity that has individual absolute values may be set. For example, the control quantity in the direction of increasing transmit power, when the first control quantity varying threshold is exceeded, may be set to +0.5 dB, and the control quantity in the direction of reducing transmit power may be set to -0.7 dB. As a result, a larger effect of suppressing the total transmit power can be obtained.

Then, in per-channel transmitting units 202-1 to 202-3, based on the TPC bit outputted from transmit power control unit 201 and the control quantity outputted from control amount determination unit 207, transmit power (amplitude) control based on a TPC bit is performed, and after being subjected to spreading processing, transmit data is outputted to multiplexing combining unit 203.

In this manner, in a transmitting apparatus of a radio base station of a mobile communications radio network which inserts a TPC bit in a radio line having a plurality of mobile terminals connected thereto by a multiple access scheme and which thereby controls transmit power, there can be provided a transmit power control method by which it is scarcely likely that the allowable maximum transmit power of the apparatus is instantaneously exceeded and at the same time, transmit power control is performed only for individual channels and not for a shared channel. This is because the power control quantity is reduced as the total transmit power value approaches the allowable maximum transmit power of the apparatus, and also the power control quantity is made nonuniform in an increasing direction and decreasing direction.

### (Third Embodiment)

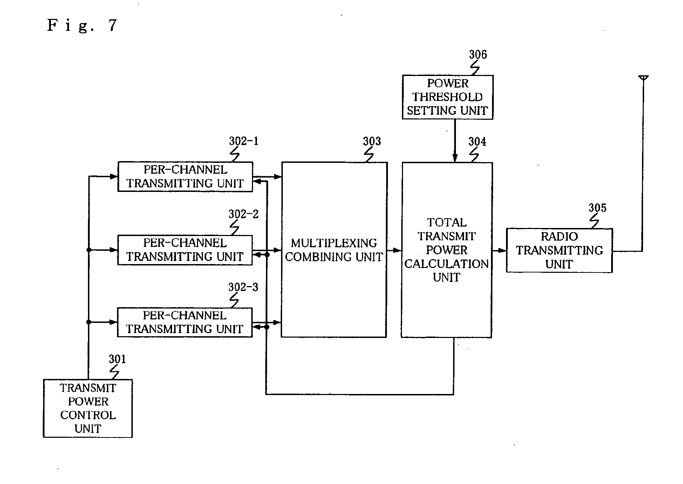

Referring to Fig. 7, there is illustrated a third embodiment of a radio base station including transmit power control unit 301, per-channel transmitting units 302-1 to 302-3, multiplexing combining unit 303, total transmit power calculation unit 304, radio transmitting unit 305 and power threshold setting unit 306. Transmit power control unit 301 performs demodulation to obtain a TPC bit which is transmit power control information assigned in uplink signals transmitted from each mobile terminal, and also outputs a TPC bit that corresponds to each channel (downlink signals transmitted to each mobile terminal) to per-channel transmitting units 302-1 to 302-3. Per-channel transmitting units 302-1 to 302-3 generate transmit data of a shared channel and individual channels. Also, per-channel transmitting units 302-1 to 302-3 apply power (amplitude) control and spreading modulation to the generated transmit data based on the TPC bit outputted from transmit power control unit 301 and a transmit excess output signal outputted from total transmit power calculation unit 304. Also, after power (amplitude) control and spreading modulation, the spread data of each channel are outputted to multiplexing combining unit 303. Multiplexing combining unit 303 multiplexes the spread data of each channel outputted from per-channel transmitting units 302-1 to 302-3, and also outputs the multiple signal to total transmit power calculation unit 304. Power threshold setting unit 306 arbitrarily sets suppression start and cancel power thresholds for suppressing transmit power, and also outputs the set power threshold to total transmit power calculation unit 304. Total transmit power calculation unit 304 transmits to radio transmitting unit 305 the multiple signal of channels outputted from multiplexing combining unit 303, and also calculates a total transmit power value based on multiple signal power (amplitude) information. Also, total transmit power calculation unit 304 outputs a transmit excess output signal to per-channel transmitting units 302-1 to 302-3 during the period from when the calculated total transmit power value exceeds the suppression start power threshold outputted from power threshold setting unit 306 to when the calculated total transmit power value falls below the suppression cancel power threshold outputted from power threshold setting unit 306. Radio transmitting unit 305 performs D/A (digital-analog) conversion, band limiting, amplification and frequency conversion of the baseband multiple signal which is the multiple signal outputted from total transmit power calculation unit 304, and then outputs the RF signal to an antenna. Per-channel transmitting units 302-1 to 302-3 correspond to channels #0 to #2, respectively. In the present embodiment, the number of channels is three, but that number is equal to the number of used channels and not limited to three.

According to the present embodiment, when using the transmit excess output signal described in the first embodiment, the control quantity described in the second embodiment is controlled separately in respective per-channel transmitting units 302-1 to 302-3.

For example, when the allowable maximum transmit power of an apparatus is +43 dBm (19952.6 mW) and the individual channel power currently set in per-channel transmitting unit 302-1 is +36 dBm (3981.072 mW) and the individual channel power currently set in per-channel transmitting unit 302-2 is +20 dBm (100 mW), if the control quantity of transmit power has the same value of +1 dB, the amounts of power change that are dependent on the power control quantity in the two channels are 1030.801 mW and 25.89254 mW, respectively; a large difference exists therebetween. Accordingly, even when the control quantity of transmit power has the same value of +1 dB, when the power is low, the effect on the total transmit power is small; and as the power increases, the effect on the total transmit power becomes larger.

Thus, if the control quantity of transmit power is set to +0.1 dB when the set power of individual channel is +36 dBm, the amount of power change is +92.73107 mW, which hardly causes the total transmit power to increase. Accordingly, it is possible to reduce the probability that the allowable maximum transmit power of the apparatus will be instantaneously exceeded.

In this manner, in a radio base station transmitting apparatus of a mobile communications radio network which inserts a TPC bit in a radio line having a plurality of mobile terminals connected thereto by a multiple access scheme and which thereby controls transmit power, there can be provided a transmit power control method by which it is scarcely likely that the allowable maximum transmit power of apparatus will be instantaneously exceeded and at the same time, transmit power control is performed only for individual channels and not for a shared channel. This is because the control quantity of transmit power control is varied according to the set power of each channel which performs transmit power control on a per-slot basis.

While a preferred embodiment of the present invention has been described in specific terms, such description is for illustrative purpose only, and it is to be understood that changes and variations may be made without departing from the spirit or scope of the following claims.

## Claims

1. A radio base station, wherein when there is a succession of transmit power control information transmitted from a mobile terminal, containing an instruction to raise transmit power for transmitting a signal to the mobile terminal, during a period from when the calculated total transmit power, based on power information of a multiple signal that is obtained by multiplexing signals transmitted by each mobile terminal, exceeds a preliminarily set power threshold to when the total transmit power falls below the preliminarily set power threshold, the transmit power control information is converted to transmit power control information indicating an instruction to maintain transmit power at a constant level, and wherein the transmit power is controlled based on the converted transmit power control information, and wherein the signal is transmitted to the mobile terminal by use of the controlled transmit power.

2. The radio base station according to claim 1, wherein the power threshold is set as a suppression start power threshold and a suppression cancel power threshold, and wherein when the total transmit power exceeds the suppression start power threshold, the conversion is started, and wherein when the total transmit power falls below the suppression cancel power threshold, the conversion is cancelled.

3. The radio base station according to claim 1, wherein an order of priority of the mobile terminal is determined, and wherein when the total transmit power falls below the suppression cancel power threshold, the conversion is cancelled according to the order of priority sequentially for each mobile terminal.

4. The radio base station according to claim 3, wherein the order of priority is determined based on previously accumulated results of the transmit power control information.

5. The radio base station according to claim 3, wherein the order of priority is determined based on a set power that is set for each mobile terminal.

6. The radio base station according to claim 3, wherein the order of priority is determined based on reception SIR transmitted from the mobile terminal.

7. A radio base station, wherein a control quantity of transmit power for transmitting a signal to a mobile terminal is determined based on a calculated total transmit power based on power information of a multiple signal obtained by multiplexing signals transmitted by each mobile terminal, and wherein the transmit power is controlled based on the determined control quantity and transmit power control information transmitted from the mobile terminal, and wherein the signal is transmitted to the mobile terminal by use of the controlled transmit power.

8. The radio base station according to claim 7, wherein when the total transmit power exceeds a control quantity threshold for determining the control quantity, the control quantity is varied.

9. The radio base station according to claim 7, wherein when the total transmit power falls below a control quantity threshold for determining the control quantity, the control quantity is varied.

10. The radio base station according to claim 7, wherein a different control quantity is determined for each mobile terminal that is a destination of the signal.

11. A method for use in a radio base station that controls transmit power for transmitting a signal to a mobile terminal based on transmit power control information transmitted from the mobile terminal, the method comprising:
a step in which when there is a succession of transmit power control information indicating an instruction to raise transmit power, during a period from when a calculated total transmit power, based on power information of a multiple signal that is obtained by multiplexing signals transmitted by each mobile terminal, exceeds a preliminarily set power threshold to when the total transmit power falls below the preliminarily set power threshold, the transmit power control information is converted to transmit power control information indicating an instruction to maintain transmit power at a constant level;
a step of controlling the transmit power based on the converted transmit power control information; and
a step of transmitting the signal to the mobile terminal by use of the controlled transmit power.

12. The method according to claim 11, wherein the power threshold is set as a suppression start power threshold and a suppression cancel power threshold, the method further comprising:
a step in which, and when the total transmit power exceeds the suppression start power threshold, the conversion is started; and
a step in which when the total transmit power falls below the suppression cancel power threshold, the conversion is cancelled.

13. The method according to claim 11, further comprising:
a step of determining an order of priority of the mobile terminal; and
a step in which when the total transmit power falls below the suppression cancel power threshold, the conversion is cancelled according to the order of priority sequentially for each mobile terminal.

14. The method according to claim 13, further comprising a step of determining the order of priority based on previously accumulated results of the transmit power control information.

15. The method according to claim 13, further comprising a step of determining the order of priority based on a set power that is set for each mobile terminal.

16. The method according to claim 13, further comprising a step of determining the order of priority based on reception SIR transmitted from the mobile terminal.

17. A method for use in a radio base station that controls transmit power for transmitting a signal to a mobile terminal based on transmit power control information transmitted from the mobile terminal, the method comprising:
a step of determining a control quantity of the transmit power based on a calculated total transmit power based on power information of a multiple signal obtained by multiplexing signals transmitted by each mobile terminal;
a step of controlling the transmit power based on the determined control quantity and the transmit power control information; and
a step of transmitting the signal to the mobile terminal by use of the controlled transmit power.

18. The method according to claim 17, further comprising a step of varying the control quantity when the total transmit power exceeds a control quantity threshold for determining the control quantity.

19. The method according to claim 17, further comprising a step of varying the control quantity when the total transmit power falls below a control quantity threshold for determining the control quantity.

20. The method according to claim 17, further comprising a step of determining a different control quantity for each mobile terminal that is a destination of the signal.
